# EUROPEAN PATENT SPECIFICATION

(11) **EP 1 662 903 B1**
(45) Date of publication and mention of the grant of the patent: **28.02.2007**
(21) Application number: 04764270.7
(22) Date of filing: 19.08.2004
(51) Int. Cl.: A23L 1/29, A23L 1/307, A23L 1/305, A61K 38/01

(54) **FOOD COMPOSITION**
NAHRUNGSMITTELZUSAMMENSETZUNG
COMPOSITION ALIMENTAIRE

(30) Priority: 08.09.2003 GB 0320990
(43) Date of publication of application: 07.06.2006
(73) Proprietor: UNILEVER N.V., 3013 AL Rotterdam (NL); UNILEVER PLC, London EC4P 4BQ (GB)
(72) Inventor: EPPLER, Wolfgang Unilever Bestfoods Deutschland, 74074 Heilbronn (DE); GLAETSCH, Brigitte Unilever Bestfoods Deutschland, 74074 Heilbronn (DE); MAHUT, Jean, B. Unilever Bestfoods Deutschland, 74074 Heilbronn (DE); MULLER, Rudi, Gunter Unilever Bestfoods Deutschlan, 74074 Heilbronn (DE)
(74) Representative: Wurfbain, Gilles L.
(86) International application number: PCT/EP2004/009285
(87) International publication number: WO 2005/023017

(56) References cited:
- EP-A- 0 768 043
- WO-A-02/087562
- GB-A- 1 526 107
- US-A- 4 042 687
- US-A1- 2003 143 287
- SARWAR G., BOTTING H.G.: "Liquid concentrates are lower in bioavailability tryptophan than powdered infant formulas, and tryptophan supplementation of formulas increases brain tryptophan and serotonin in rats" JOURNAL OF NUTRITION, vol. 129, no. 9, September 1999 (1999-09), page 1692-1697, XP002310346
- ANDREWS J.W., PAGE J.W., MURRAY M.W.: "Supplementation of a semipurified casein diet for catfish with free amino acids and gelatin" THE JOURNAL OF NUTRITION, vol. 107, no. 7, July 1977 (1977-07), pages 1153-1156, XP009041471 ISSN: 0022-3166
- "Commission Directive 96/8/EC of 26 February 1996 on foods intended for use in energy-restricted diets for weight reduction"[Online] 26 February 1996 (1996-02-26), XP002310347 Retrieved from the Internet: URL:http://europa.eu.int/comm/food/food/la bellingnutrition/weight/df09_en.pdf> [retrieved on 2004-12-06] cited in the application

## Description

### Field of the Invention

The present invention relates to food compositions having improved physical and organoleptic properties, and which are suitable for use as meal replacement products.

### Background of the Invention

The incidence of obesity and the number of people considered overweight in countries where a so-called Western diet is adopted has drastically increased over the last decade. Since obesity and being overweight are generally known to be associated with a variety of diseases such as heart disease, type 2 diabetes, hypertension and arthereosclerosis, this increase is a major health concern for the medical world and for individuals alike. Furthermore, being overweight is considered by the majority of the Western population as unattractive.

This has led to an increasing interest by consumers in their health and has created a demand for products that help to reduce or control daily caloric intake and/or control body weight and/or bodily appearance.

Several solutions have been proposed to help individuals to control their weight. Among these solutions is the use of drugs e.g. to suppress the activity of enzymes in the digestive system. However the use of drugs is often not preferred unless strictly required for medical purposes.

Another proposed solution is to prescribe the individuals a specific diet, for example, a diet with a restricted caloric intake per day. A problem with these diets is that often they do not provide a healthy nutritional balance and/or they are difficult to accommodate in modern lifestyles.

Meal replacement products have also been proposed as part of a healthy diet in order to control or reduce body weight. For example, US 5,688,547 discloses a nutritional meal replacement composition comprising dietary fibre, protein and a cellulose gum and gel.

These meal replacement products are generally products that are intended to be consumed as a single-serving food product, such as a bar, drink etc. to replace one or two meals per day. The meal replacer products are designed such that on the one hand they provide a restricted caloric intake, but on the other hand they provide a healthy balance of nutritional ingredients and are convenient to incorporate into an individual's daily diet.

An increasingly popular form for ingestion of nutrients for those seeking to lose weight is the nutrition bar. The nutrition bar provides a convenient vehicle for replacing a meal or for supplementing meals as a snack. While consumers express a preference for snacks and other foods which are more healthful and which can assist them to achieve their weight loss goals, they show little inclination to sacrifice the organoleptic properties of their favourite foods. Therefore, the successful food formulator must improve the nutrient value of the food while maintaining desirable organoleptic properties.

Other forms of meal replacement products include soups, pasta products and cereals. Often these products are provided to the consumer in the form of a dehydrated composition, which the consumer can then add water, or another liquid such as milk, to in order to prepare the finished meal replacement product.

The requirements set for meal replacement products (or, according to the official definition, meal replacement for weight control products) discussed above or other low-calorie products are very strict, with products needing particular levels of components in order to satisfy regulatory criteria. For example, the EC Directive 96/8/EC on foods intended for use in energy-restricted diets for weight reduction requires that, in order to be marketed as a meal replacer, at least 25% of the nutrient energy in the food product, but not more than 50%, must be provided in the form of protein. The fat content of the food product must not exceed 30% of the total available energy. Furthermore, the total energy content of the product must be from 200 to 400 kcal.

In addition, EC Directive 96/8/EC states that the food product must have the required balance of amino acids. The provisions on protein are calculated relative to the standard FAO/WHO (1985) reference protein. The protein composition of a meal must be at least equal to 80% that of the reference protein. The chemical index is the profile of essential amino acids. The amino acid requirements for the reference protein are:

| **Amino acid** | **Grams per 100g total protein in the product** |
|---|---|
| Cystine and methionine | 1.7 |
| Histidine | 1.6 |
| Isoleucine | 1.3 |
| Leucine | 1.9 |
| Lysine | 1.6 |
| Phenylalanine and tyrosine | 1.9 |
| Threonine | 0.9 |
| Tryptophan | 0.5 |
| Valine | 1.3 |

In order to meet these criteria, it is necessary to employ a high protein level, and to ensure the correct balance of amino acids within this protein. Previously, this has been achieved using primarily animal proteins such as dairy proteins from sources such as milk powder and whey protein. Vegetable proteins have also been used to achieve the high protein level.

However, it has been found that these proteins have a major impact on the properties of the food product, such as the appearance, taste and texture. Such proteins have a negative impact on mouthfeel, with products being more sticky, lumpy or powdery, or more viscous than is desirable. This occurs because the proteins are used at high levels and do not hydrate well. In the case of dehydrated products such as instant soup compositions, adding more water to the product in order to reduce the stickiness and viscosity is not an acceptable solution, since this will significantly increase the volume and the product will not be regarded as a "single-serving" which can be consumed by the customer.

The proteins may also have a negative impact on taste, for example by masking other flavours within the food product. The proteins often have a bad, or at least characteristic and less desirable, taste. Since the required protein level for meal replacement products is very high and the proteins much therefore be applied at a high percentage of the product, the taste of the proteins must be compensated for by increasing the amount of the desired flavourings.

Another disadvantage of prior art compositions is that the protein sources can give a less desirable appearance, for example by having a whitening effect which may be undesirable, particularly in products which are intended to be substantially transparent (e.g. clear soups).

A further disadvantage is the inherently low protein level in many of the protein sources previously used. If the protein source has a low protein level, a much greater amount must be used in order to meet the required protein level for meal replacement products. Many of the protein sources are incorporated into the product in the form of a powder. However, at high levels of these powders the resulting composition has mixing problems when water or other liquid is added. Dispersion problems due to the high powder level are common. Furthermore, it is not straightforward simply to use a different protein source. For example, in low pH products such as tomato soup, only certain types of proteins can be used in order to achieve the necessary pH.

Such proteins are therefore undesirable because of their negative impact on the many properties of food compositions, particularly in the field of meal replacement products.

The present invention seeks to address one or more of the above-mentioned problems.

In particular, it is an object of the present invention to provide meal replacement products or other calorie-controlled products which have a high protein level but which also maintain good organoleptic properties, even upon storage.

GB-A-2 019 409 relates to a high protein solid dietary food containing hydrolysed gelatin.

GB-A-1 526 107 relates to a nutritional composition comprising substantially hydrolysed gelatine, tryptophane and a carrier.

EP-A-259 167 discloses an orally ingestible water soluble nutrient blend comprising non-essential amino acids, which may comprise tryptophan, nutrient factors, carbohydrates, electrolytes and flavouring.

### Summary of the Invention

Surprisingly we have found that by using a particular non-dairy source of protein in combination with a source of tryptophan, excellent organoleptic properties can be achieved while still meeting the criteria for meal replacement products.

Thus, according to a first aspect, the present invention provides a food composition comprising:
(i) from 5 to 30 wt% hydrolysed gelatin, based on the total weight of the composition, and
(ii) a tryptophan source, wherein the proportion of tryptophan is less than 100%
wherein at least 25% of the nutrient energy of the food composition is provided by protein, and wherein the composition comprises less than 25 wt% of dairy protein.

The products can be manufactured by conventional techniques and are economical to produce. They are also stable upon storage.

Preferably the food composition is a meal replacer or other food composition intended to be used in a weight loss or weight control plan.

The food compositions according to the invention comprise elevated levels of protein yet do not suffer from a deterioration in taste or other organoleptic properties (such as appearance, e.g. browning or texture) over time. Preferably the compositions do not suffer from the aforementioned problems for at least 6 months upon storage at 20°C, more preferably at least 7 months, most preferably at least 8 months, ideally at least one year.

The term "meal replacer" or "meal replacement products" as used herein refer to products (compositions) which are intended to replace one or more conventional meals a day as part of a weight loss or weight plan; they are of a controlled calorie content and are generally eaten as a single product or portion.

The term "comprising" is not meant to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

Except in the operating and comparative examples, or where otherwise explicitly indicated, all numbers in this description indicating amounts of material or conditions of reaction, physical properties of materials and/or use are to be understood as modified by the word "about." All amounts are by weight, based on the total weight of the relevant composition, unless otherwise specified.

Unless stated otherwise or required by context, the terms "fat" and "oil" are used interchangeably herein. Also, unless stated otherwise or required by context, the terms "nutritional bar(s)" and "nutrition bar(s)" are used interchangeably herein.

For a more complete explanation of the above and other features and advantages of the invention, reference should be made to the following description of the preferred embodiments. The preferred embodiments apply to all aspects of the invention and can be used as appropriate for each aspect.

### Hydrolysed gelatin

The food compositions of the invention comprise from 5 to 30 wt%, based on the total weight of the composition, of hydrolysed gelatin.

Hydrolysed gelatin has been found to provide many advantages to food compositions. This can be at least partly attributed to the very high protein content of hydrolysed gelatin. For example, hydrolysed gelatin can comprise 95wt% protein, compared to 30wt% protein for some dairy protein sources. As a result, a high protein level in the final product can be achieved by adding a lower amount of hydrolysed gelatin compared to other protein sources. This reduces the negative effects discussed above which arise from the use of protein sources. For example, the taste masking effect is reduced, and the negative effects on viscosity and dispersion of the product in liquid are not encountered to the same degree.

Preferably the amount of hydrolysed gelatin in the composition is from 6.5 to 20 wt%, more preferably from 8 to 15 wt%, and most preferably from 9 to 12 wt%.

Hydrolysed gelatin can be prepared from a range of gelatin sources by an enzymatic (proteolytic) treatment and can have differing properties depending on its source and method of production. Possible sources pork skin, beef skin, ossein from beef and pork bones or collagen from fish sources.

It is preferred that the hydrolysed gelatin has an average molecular weight within a particular range in order to ensure there is no negative impact on physical properties such as viscosity, and to ensure there are no free amino acids and short chain peptides in the product which can adversely affect shelf stability (and lead to an off flavour formulation). The average molecular weight of the hydrolysed gelatin is preferably 2.0 to 10.0 kDalton, more preferably 3.0 to 7.0 kDalton. A peptide with a chain-length of approximately 25-40 amino acids on average is preferred.

Hydrolysed gelatin may be referred to be other names, such as hydrolysated gelatin, non-gelatinizing gelatin or gelatin hydrolysate.

### Tryptophan source

The food compositions of the invention also comprise a tryptophan source. Tryptophan is one of the essential amino acids required by the body. It is required for the production of niacin (vitamin B3). It is also used by the body to produce serotonin, a neurotransmitter that is important for normal nerve and brain function. Serotonin is important in sleep, stabilizing emotional moods, pain control, inflammation, intestinal peristalsis and other bodily functions. As a result, an amount of tryptophan is required in the composition in order to meet the criteria for meal replacement products.

The tryptophan source of the invention has a tryptophan content of less than 100%. Thus, a source of pure tryptophan cannot be used in the compositions according to the invention because the inventors surprisingly found that it negatively impacted storage stability of the product. Instead, another ingredient is included in the composition which provides the desired level of tryptophan, and which may also provide other desirable properties and attributes to the composition. Preferably the tryptophan source is a natural ingredient or an extract of a natural ingredient.

When choosing the tryptophan source for use in the present invention, it is preferable to employ a component which provides other benefits in the composition. Examples of such tryptophan sources include dairy and vegetable proteins.

Tryptophan is found in small amount in many different sources. However, sources which include higher than average tryptophan levels include whey protein, egg white or egg albumin, whole egg powder, milk protein, yeast extract, tomato powder, brazil nut protein, inca peanut protein, soybean protein, cottonseed protein and sunflower protein.

It is preferred that the tryptophan source comprises whey protein, egg white or egg albumin, whole egg powder, milk protein, yeast extract, tomato powder or mixtures thereof. However, if a dairy protein source is included, it is important that dairy protein accounts for less than 25 wt% of the food composition, based on the total weight of the composition. At levels greater than 25 wt% the dairy protein has a negative impact on the properties of the food composition. For example, it can cause undesirable thickening of the product, or can mask the flavour of other ingredients. Preferably the food composition comprises less than 15 wt% of dairy protein, more preferably less than 10 wt%.

Tryptophan contents for some of the common sources of tryptophan are as follows:

| **Tryptophan source** | **Grams of tryptophan per 100 grams tryptophan source** | |
|---|---|---|
| Whole egg powder | 0.81 | (range 0.56 -1.02) |
| Egg white powder | 1.26 | |
| Tomato powder (calculated from fresh tomato | approx. 0.1 | |
| Whey concentrate | up to 1.9 | |
| Yeast extract | 0.74 | |
| Skim milk powder | 0.49 | (range 0.34 - 0.64) |
| Whey powder | 0.25 | |

These data are found in the Souch-Fachmann-Kraut database.

The tryptophan sources of the present invention are preferably those which comprise upwards of from about 50mg tryptophan per 100 grams of tryptophan source. A preferred amount of tryptophan in the tryptophan source is more than 100mg of tryptophan per 100 grams, preferably from 0.1 grams to 5 grams, more preferably from 0.3 grams to 5 grams, and most preferably from 0.7 to 3 grams.

### Protein

Provided the requirements for hydrolysed gelatin and a tryptophan source are satisfied, and provided the amount of dairy protein in the composition is less than 25 wt%, the composition may comprise further sources of protein.

Proteins from various sources exist and have been used in meal replacement products for many years. Such proteins may be described as animal proteins (including dairy proteins) or vegetable proteins, or may be derived from yeast.

Some examples include dairy protein sources such as whole milk, skim milk, condensed milk, evaporated milk, milk solids non-fat, and mixtures thereof and include whey protein such as whey protein isolate and whey protein concentrate and caseins; egg proteins; vegetable protein sources such as soy, wheat, rice or pea and mixtures thereof; and animal sources of protein including gelatin. Soy and dairy proteins are preferred according to the invention for dairy type food compositions such as drinks, puddings etc. and animal proteins are preferred for savoury compositions such as soups.

Soy and dairy proteins are preferred when the food composition of the invention is a drink or a pudding, whereas animal, yeast and plant derived proteins are preferred for savoury compositions such as soups and pasta meals.

The protein may be present as the isolated protein, as a protein concentrate or as a protein hydrolysate.

The protein may be included in any suitable physical form, depending upon the type of food composition, including as a powder or as nuggets as appropriate. Powder sources are typically most suitable for use according to the present invention for reasons of organoleptic properties.

It is further preferred that the protein provides from 25 to 75% of the total calories of the composition, more preferably between 25 % and 45%, most preferably between 25 and 40%.

### Carbohydrate

The compositions of the invention preferably comprise carbohydrate. The carbohydrates are preferably present in an amount of from 2 to 60 % by weight based on the weight of the composition, more preferably 5 to 40 %wt.

The amount of carbohydrate in the food composition will vary according to the composition and also, where required, according to national or regional legislation.

Any suitable carbohydrates may be included in the food compositions. Suitable examples include starches such as are contained in rice flour, flour, tapioca flour, tapioca starch and whole wheat flour, modified starches or mixtures thereof. Generally the food compositions will be naturally sweetened and this is preferred as a source of carbohydrate. Suitable natural sweeteners include sugars and sugar sources such as sucrose, lactose, glucose, fructose, maltose, galactose, corn syrup (including high fructose corn syrup), sugar alcohols, maltodextrins, high maltose corn syrup, starch, glycerine, brown sugar and mixtures thereof.

Levels of sugars and sugar sources preferably result in sugar solids levels of up to 40 wt%, preferably from 5 to 20 wt% based on the weight of the food compositions. The artificial sweeteners mentioned below as optional ingredients may also be used the whole, or a part, of the carbohydrate source.

The compositions preferably contain a total amount of from 0.1 to 10%wt dietary fibre, more preferably 0.2 to 7.5%wt, most preferably 0.5 to 5%wt, especially 1 to 3.5%wt. These amounts include any biopolymer thickening agent present in the composition that is a dietary fibre. Suitable fibre sources which may be included in the food compositions of the invention, in addition to the biopolymer thickening agent, include fructose oligosaccharides such as inulin, soy fiber, fruit fibre e.g. apple, oat fiber, celluloses and mixtures thereof.

It is further preferred that the total amount of carbohydrate in the food compositions provides from 10 to 75% of the total calories therein, more preferably 25 to 75%.

### Polysaccharides

The food compositions may optionally comprise one or more polysaccharides. Preferably, these optional other polysaccharides are selected from ionic, preferably anionic, non-starch polysaccharides and neutral non-starch polysaccharides.

Preferred ionic non-starch polysaccharides are alginates having an L-guluronic acid content of less than 60% of the total uronic acid units in the alginate, pectins including amidated pectins, carrageenans, xanthans, gellans, furcellarans, karaya gum, rhamsan, welan, gum ghatti, gum arabic and salts or mixtures thereof. Suitable salts include the alkaline and alkaline earth metal salts, especially sodium, potassium, calcium or magnesium salts.

The food composition may optionally additionally comprise a neutral non-starch polysaccharide. Especially preferred neutral non-starch polysaccharides are galactamannan, guar gum, locust bean gum, tara gum, ispaghula, β-glucans, konjacglucomannan, methylcellulose, gum tragacanth, detarium, tamarind or mixtures thereof. Of these, galactamannan, guar gum, locust bean gum and tara gum are especially preferred.

It is preferred that the neutral non-starch polysaccharides have a weight average molecular weight of at least 3 x 105, ore preferably of at least 5 x 10⁵, most preferably of at least 7 x 10⁵. It is also preferred that these biopolymers have a molecular weight of up to 3 x 10⁶, more preferably of up to 2.5 x 10⁶, most preferably of up to 2.3 x 10⁶.

These optional ionic and neutral non-starch polysaccharides, if present in the compositions, are preferably present in an amount of from 0.1 to 2%wt of the composition, more preferably 0.5 to 1.5%wt.

If a mixture of ionic non-starch polysaccharide and neutral non-starch polysaccharide is used, the weight ratio thereof is preferably in the range of from 5:1 to 1:5, more preferably 3:1 to 1:3, such as 2:1 to 1:2. One preferred mixture is a mixture of alginate according to the invention and guar gum.

### Fat

The compositions of the invention preferably comprise food fats, preferably in an amount of up to 30 %wt based on the weight of the composition, more preferably from 0.1 to 20 %wt, most preferably from 0.2 to 10 %wt fat, especially 0.5 to 5%wt.

According to the present invention, 30% or less of the energy in the food composition is preferably provided from the fat. It is more preferred from 5 to 20% of the energy is provided from the fat.

The amount of fat will vary according to the composition and also, where required, according to national or regional legislation. For example, EC Directive 96/8/EC states that for meal replacement products the energy derived from fat shall not exceed 30% of the total energy of the product. Additionally, the linoleic acid (in the form of glycerides) shall not be less than 1g.

Any food fat may be used for example, animal fats including fish oils, vegetable fats including plant oils, nut oils, seed oils, or mixtures thereof. Monosaturated and/or polyunsaturated fats and mixtures thereof are especially preferred although saturated fats can be used for taste reasons, e.g. butter, although these are less preferred on health grounds. Preferred polyunsaturated fats include omega 3 fatty acids, especially docosahexaenoic acid (DHA, C20:5) and/or eicosapentaenoic acid (EPA, C22:5). Preferred omega 3 fatty acids include the following C18:3, C18:4, C20:4, C20:5, C22:5 and C22:6.

Preferably the fat is selected from vegetable fats, such as for example, cocoa butter, illipe, shea, palm, palm kernal, sal, soybean, safflower, cottonseed, coconut, rapeseed, canola, corn and sunflower oils, tri and di-glyceride oils including linoleic acids and conjugated linoleic acids, linolenic acids, and mixtures thereof.

### Optional ingredients

The food compositions of the invention may comprise one or more of the following optional ingredients.

The compositions of the invention may further comprise encapsulated satiety agents which are predominantly released in the intestines. Suitable satiety agents include lipids, especially mono, di or tri-glycerides, their free fatty acids, their food salts, their non-glyceryl esters, hydrolysable in the presence of gastro-intestinal enzymes, and mixtures thereof. These satiety agents may be encapsulated in any suitable crosslinked encapsulating agent whereby they are predominantly released in the intestines. Encapsulant materials comprising gelatin and at least one of gum arabic, carrageenan, agar agar, alginate or pectins, especially gelatin and gum arabic, have been found to be very suitable. These encapsulated satiety agents may be included in suitable amounts.

The composition may comprise one or more emulsifiers. Any suitable emulsifier may be used, for example lecithins, egg yolk, egg-derived emulsifiers, diacetyl tartaric esters of mono, di or tri glycerides or mono, di, or triglycerides. The composition may comprise of from 0.05 to 10% by weight, preferably from 0.5% to 5%wt of the emulsifier based on the weight of the product.

If it is desired to include a bulking agent in the nutrition bars, within or external to the protein nuggets, a preferred bulking agent is inert polydextrose. Other conventional bulking agents which may be used alone or in combination therewith include maltodextrin, sugar alcohols, corn syrup solids, sugars or starches. Total bulking agent levels in the protein nuggets, and in the nutritional bars of the invention, will preferably be from about 0% to 20 wt%, preferably 5% to 16%. Polydextrose may be obtained under the brand name Litesse.

Flavourings are preferably added to the food compositions in amounts that will impart a mild, pleasant flavour. The flavouring may be any of the commercial flavours typically employed. When a non-savoury taste is desired the flavours are typically selected from varying types of cocoa, pure vanilla or artificial flavour, such as vanillin, ethyl vanillin, chocolate, malt, mint, yogurt powder, extracts, spices, such as cinnamon, nutmeg and ginger, mixtures thereof, and the like. It will be appreciated that many flavour variations may be obtained by combinations of the basic flavours. When a savoury taste is desired the flavours are typically selected from varying types of herbs and spices. Suitable flavourings may also include seasoning, such as salt, and imitation fruit or chocolate flavours either singly or in any suitable combination. Flavourings which mask off-tastes from vitamins and/or minerals and other ingredients are preferably included in the food compositions. Other flavourings such as fruit flavourings may also be used, with an example being pineapple flavouring.

Among fibre sources which may be included in the food compositions of the invention are fructose oligosaccharides such as inulin, soy fiber, fruit fibre e.g. apple, guar gum, gum arabic, gum acacia, oat fiber, cellulose and mixtures thereof. The compositions preferably contain at least 2 grams of fiber per 56 g serving, especially at least 5 grams of fiber per serving. Preferably, fiber sources are present in the product at greater than 0.5 wt% and do not exceed 15 wt%, especially 10 wt%. As indicated above, additional bulking agents such as maltodextrin, sugar alcohols, corn syrup solids, sugars, starches and mixtures thereof may also be used. Total bulking agent levels in the products of the invention, including fibres and other bulking agents, will preferably be from about 0% to 20%, especially from 1 to 15 wt%.

The food compositions may comprise one or more conventional colourants, in conventional amounts as desired.

The composition may also comprise 0.1 to 5% by weight of food buffering salts based on the weight of the composition. Any suitable food buffering salt may be used.

The composition may comprise up to 60% by weight of fruit or vegetables particles, concentrates, juice or puree based on the weight of the composition. Preferably the composition comprise 0.1 to 40%wt, more preferably 1 to 20%wt of these ingredients. The amount of these ingredients will depend upon the type of product; for example soups will typically comprise higher levels of vegetables than will a milk based meal replacement drink.

The composition may comprise one or more cholesterol lowering agents in conventional amounts. Any suitable, known, cholesterol lowering agent may be used, for example isoflavones, phytosterols, soy bean extracts, fish oil extracts, tea leaf extracts.

The composition may optionally comprise, in suitable amounts, one or more agents which may beneficially influence (post-prandial) energy metabolism and substrate utilisation, for example caffeine, flavonoids (including tea catechins, capsaicinoids and canitine).

The composition may comprise up to 10 or 20% by weight, based on the weight of the composition, of minor ingredients selected from added vitamins, added minerals, herbs, spices, antioxidants, preservatives or mixtures thereof. Preferably the compositions comprise of from 0.05 to 15% by weight, more preferably 0.5 to 10% of these ingredients.

The composition preferably comprises added vitamins selected from at least one of; Vitamin A Palmitate, Thiamine Mononitrate (Vitamin B1), Riboflavin (Vitamin B2), Niacinamide (Vitamin B3), d-Calcium Pantothenate (Vitamin B5), Vitamin B6, Vitamin B11, Cyanocobalamin (Vitamin B12), biotin, Ascorbic acid (Vitamin C), Vitamin D, Tocopheryl Acetate (Vitamin E), Biotin (Vitamin H), and Vitamin K. The composition also preferably comprises added minerals selected from at least one of; calcium, magnesium, potassium, zinc, iron, cobalt, nickel, copper, iodine, manganese, molybdenum, phosphorus, selenium and chromium. The vitamins and/or minerals may be added by the use of vitamin premixes, mineral premixes and mixtures thereof or alternatively they may be added individually. The vitamins and minerals must be provided in the composition in a format which allows them to be absorbed by the consumer and must hence have good bioavailability.

In particular the food compositions preferably comprise alkaline metals such as sodium and/or potassium.

Calcium is preferably present in the food compositions in amounts of from 5 to 150% of the amounts given in the European Commission Directive 96/8/EC of 26 February 1996 on foods intended for use in energy-restricted diets for weight reduction, more preferably about 10 to 135% per serving. Any suitable calcium source may be used.

It is preferred that the food compositions comprise at potassium, especially in an amount of at least 300 mg of potassium per serving of the food composition, more preferably 400-1000, most preferably 500-700mg. Any suitable potassium source may be used.

One or more of the above-mentioned vitamins and minerals are preferably present at amounts of from 5 to 45% of the amounts given in the above European Commission Directive 96/8/EC, especially 5 to 40%, most especially 10 to 30%.

Generally the nutrition bars of the invention will be naturally sweetened. Natural sources of sweetness include sucrose (liquid or solids), glucose, fructose, and corn syrup (liquid or solids), including high fructose corn syrup and high maltose corn syrup and mixtures thereof. Other sweeteners include lactose, maltose, glycerine, brown sugar and galactose and mixtures thereof. Levels of sugars and sugar sources preferably result in sugar solids levels of up to 50 wt%, preferably from 5 to 18 wt%, especially from 10 to 17 wt% of the nutrition bar.

Any of the artificial sweeteners well known in the art may be used, such as aspartame, saccharine, Alitame® (obtainable from Pfizer), acesulfame K (obtainable from Hoechst), cyclamates, neotame, sucralose, mixtures thereof and the like. The sweeteners are used in varying amounts of about 0.005% to 1wt% on the bar, preferably 0.007% to 0.73% depending on the sweetener, for example. Aspartame may be used at a level of 0.05% to 0.15%, preferably at a level of 0.07% to 0.11%. Acesulfame K is preferred at a level of 0.09% to 0.15%.

Other ingredients which may be present in the compositions include, but are not limited to, rolled oats, chocolate chips or other chocolate pieces, cookie and/or cookie dough pieces, fruit pieces, such as dried cranberry, apple, etc., vegetable pieces such as rice, honey and acidulants such as malic and citric acids. The type of food composition will of course dictate the type and amount of optional ingredients used.

### Type of composition

The food composition according to the present invention may be of any type, for example a liquid or spoonable composition, a bar product or a cereal based product such as pasta, or rice. The composition may be a substantially dehydrated composition, to which the consumer must add water and/or another liquid, such as milk, to in order to prepare a food product for consumption.

Especially preferred food compositions are those which are intended to be used as part of a weight loss or weight control plan, such as a meal replacer product.

Suitable types of liquid or spoonable compositions according to the invention include dairy or vegetable based drinks such as milk or soy based drinks; oil-in-water emulsions (such as dressings and mayonnaise); creams; desserts such as mousses, custards, rice or other similar puddings, yogurts; frozen confectionery including ice cream, water ices, sorbets, and frozen yoghurts; breakfast type cereal products such as porridge; shakes, which comprise a powder mixed with a liquid such as water or milk; soups, sauces, sport drinks and fruit juices etc.

Frozen confectionery is considered to be a spoonable food composition because even though it is in a frozen state, it still meets the definition of a spoonable composition herein at the temperature at which it is consumed.

Preferred liquid or spoonable compositions are dairy or vegetable based drinks, desserts, yogurts and soups. Meal replacement dairy or vegetable based drinks and soups are especially preferred. These food compositions may exist as a powder or concentrate which is mixed with a liquid, e.g. water and/or milk, to produce a food product.

Preferably the amount of water in the liquid or spoonable compositions (including any water present in other ingredients) is in the range of from 20 to 95%wt, more preferably from 30 to 90wt%.

Alternatively, the food composition may be a nutritional bar or a cereal based product such as a pasta or rice product.

According to an aspect of the invention, the food composition may be dehydrated. When a composition is described as being dehydrated, this means that the total water content in the composition is less than 10wt%. For improved shelf stability, a water content of less than 6wt% is preferred. Such dehydrated compositions may conveniently be in the form of powders, with a liquid being added and the mixture stirred in order to generate a food product which is consumed by the customer. For example, powder can be mixed with hot or cold water and/or milk in order to make soups or shakes. Dehydrated compositions according to the invention may also be pasta or cereal based meals, to which liquid is again added to generate the final product.

The amount of liquid relative to the amount of food composition will vary depending on the food product desired. Exemplary amounts are from 1 to 99 wt% food composition and 1 to 99 wt% liquid, preferably 1 to 50 wt% food composition and 50 to 99 wt% liquid. The food product is preferably a pasta or cereal product, a soup or a shake.

In the case of powder shakes, commonly a powder dose of from 30 to 80 grams is mixed with from 200 to 500 ml of liquid in order to make the final product which is consumed by the customer. As an example, a powder dose of 36.5-37.5 grams may be mixed with 250ml of skimmed milk to make a cold shake. An exemplary hot shake comprises 56 grams of powder with 250ml of hot water. Similar ranges apply for soups, for example a current product requires 60 grams of powder with 250ml of hot water.

In the case of pasta meals, these may comprise a number of separate components. For example, they may comprise pasta and powdered sauce, which are then mixed together with liquid to make the final product. Generally 20 to 40 grams of pasta would be combined with from 30 to 70 grams of powder, and mixed with 150 to 300ml of liquid. As an example, a current product uses approximately 28 grams of pasta with 40 grams of powder and 200ml of hot water.

The terms "meal replacer" or "meal replacement products" as used herein also include compositions which are eaten as part of a meal replacement weight loss or weight control plan, for example snack products which are not intended to replace a whole meal by themselves but which may be used with other such products to replace a meal or which are otherwise intended to be used in the plan; these latter products typically have a calorie content in the range of from 50-200 kilocalories per serving.

Meal replacers are generally used by consumers following a calorie controlled diet and are especially preferred food compositions according to the invention. They have been found to be especially suitable as they can provide good satiety effects combined with restricted calorie content in a convenient form.

Other food compositions intended to be used as part of a weight loss or weight control plan typically have fewer calories per serving (or per 100 g of product) than their 'non-diet' equivalents. The calorie content of these foods is deliberately restricted accordingly. Examples include the so-called low-calorie options of every day foods. Meal replacer composition do not generally fall in this category as there may be no 'full calorie equivalent' product and also it is necessary to provide a reasonable number of calories per meal replaced.

### Calories / serving sizes

The food compositions preferably have a calorie content in the range of from 50 kilocalories (kcals) to 500 kcals, more preferably 100 kcals to 400 kcals. In order to be meal replacement products in accordance with EC Directive 96/8/EC, the food compositions must provide from 200-400 kilocalories per meal. However, it will be understood that the calorie content per serving will vary according to the type of food composition. For a dairy of soy based beverage or pudding the calorie content is typically in the range of from 50 kcals to 400 kcals, more preferably 100 or 150 kcals to 350 kcals, most preferably 200 kcals to 350 kcals per serving. For a soup the calorie content is typically in the range of from 50 kcals to 350 kcals, more preferably 100 kcals to 250 kcals. In the case of a shake, the calorie content is typically from 200 kcals to 250 kcals. These products may be consumed either to replace a meal (a meal replacer product) or as a snack product which is not intended to replace a meal.

If the food composition is a meal replacer product the calorie content per serving is typically in the range of from 150 to 350 Kcal. If the food composition is a product which is intended to be eaten as a snack product (i.e. not intended by itself to replace a whole meal) the calorie content per serving is typically in the range of from 50 to 150 Kcal.

The size of a serving of the food composition will depend upon the type of composition. A serving of the food composition as referred to herein refers to the amount of the food composition that is intended to be consumed as a single portion, typically in a single sitting. For beverages and soups, the typical serving size is in the range of from 100 to 500 ml, preferably 150 to 400ml, such as 200 to 350ml. For puddings the typical serving size is in the range of from 75g to 300g, preferably 100g to 250g, such as 125g to 200g. For bars the typical serving size is in the range of from 45g to 70g, especially 50g to 65g, such as 55g to 60g.

### Manufacture

The composition of the invention may be prepared by any suitable conventional technique according to the type of food composition. Such techniques are well known to those skilled in the art and do not need to be described further here but may include mixing, blending, extrusion homogenising, high-pressure homogenising, emulsifying, dispersing, or extruding. The compositions may be subject to a heat treatment step, for example pasteurisation or U.H.T. treatment.

### Consumption of the composition

The consumption of a composition according to the invention may occur as a part of a dietary plan, such as those to reduce or control body weight.

The food composition of the present invention may be consumed as desired. Preferably a composition is consumed at least daily, more preferably at least twice daily.

The term "weight control or weight loss plan" as used herein includes regimes, plans and diets followed for controlling body weight and also those followed for medical reasons e.g. to loose weight or to aid other health problems adversely affected by being overweight or obese.

The invention is further exemplified by the following examples, which are to be understood as to be non-limiting. Further examples within the scope of the invention will be apparent to the person skilled in the art.

### Example

A food composition having the following composition is useful in the production of a meal replacement product.

| | GRAMS PER SERVING | % OF TOTAL FORMULA |
|---|---|---|
| Instant pasta | 26.8 | 37.3 |
| Tomato powder | 8.5 | 11.9 |
| Gelatin hydrolysate | 8.0 | 11.1 |
| Tomato pulp | 6.0 | 8.3 |
| Yeast extract | 4.2 | 5.9 |
| Fat powder | 3.9 | 5.4 |
| Fructose | 4.0 | 5.6 |
| Potato starch, modified | 3.6 | 5.0 |
| Vegetable powders | 0.5 | 0.6 |
| Flavours, flavour enhancer, herbs & spices | 3.5 | 4.7 |
| Fibres | 1.35 | 1.9 |
| Citric acid | 0.3 | 0.4 |
| Vitamin mix | 0.25 | 0.35 |
| Magnesium citrate | 0.27 | 0.37 |
| Calcium lactate | 0.8 | 0.11 |
| Palm oil | 0.3 | 0.4 |
| TOTAL (powder) | 72.27 | 100.00 |

## Claims

1. A food composition comprising:
(i) from 5 to 30 wt% hydrolysed gelatin, based on the total weight of the composition, and
(ii) a tryptophan source, wherein the proportion of tryptophan in the tryptophan source is less than 100%,
wherein at least 25% of the nutrient energy of the food composition is provided by protein, and wherein the composition comprises less than 25 wt% of dairy protein.

2. A food composition according to claim 1, wherein the composition comprises from 6.5 wt% to 20 wt%, preferably from 8 wt% to 15 wt% of hydrolysed gelatin.

3. A food composition according to any preceding claim, wherein the tryptophan source is a natural ingredient or an extract of a natural ingredient.

4. A food composition according to claim 3, wherein the proportion of tryptophan in the tryptophan source is less than 50% by weight.

5. A food composition according to any preceding claim, wherein the composition comprises from 0.1 mg to 600 mg of tryptophan per serving.

6. A food composition according to any preceding claim, wherein the tryptophan source is selected from dairy, vegetable and yeast proteins and mixtures thereof, preferably in the form of whey protein, wheat protein, egg white or egg albumin, whole egg powder, milk protein, yeast extract, tomato powder, pea protein, soy protein, locust bean protein or mixtures thereof.

7. A food composition according to any preceding claim, wherein the composition comprises less than 15 wt% dairy protein.

8. A food composition according to any preceding claim, wherein the food composition is a liquid or a spoonable food composition.

9. A food composition according to any of claims 1 to 7, wherein the food composition is a nutritional bar, a pasta or cereal product, a soup or a shake.

10. A food composition according to any preceding claim, wherein the food composition is a meal replacer or other food composition for use in a weight loss or weight control plan.

11. A food composition according to any preceding claim, wherein the composition comprises carbohydrate.

12. A food composition according to any preceding claim, wherein the composition comprises up to 10wt%, preferably up to 6 wt% water.

13. A food product comprising the food composition of claim 11, and a liquid, preferably water, milk or mixtures thereof.

14. A food product according to claim 13, comprising 1 to 99 wt% food composition and 1 wt% to 99 wt% liquid, preferably comprising from 1 wt% to 50 wt% food composition and from 50 wt% to 99 wt% liquid.

## Patentansprüche

1. Nahrungsmittelzusammensetzung, umfassend:
(i) von 5 bis 30 Gew.-% hydrolysierte Gelatine, basierend auf dem Gesamtgewicht der Zusammensetzung, und
(ii) eine Tryptophanquelle, worin der Anteil an Tryptophan in der Tryptophanquelle geringer als 100% ist,
worin mindestens 25% der Nährstoffenergie der Nahrungsmittelzusammensetzung durch Protein vorgesehen werden und worin die Zusammensetzung weniger als 25 Gew.-% Molkereiprotein umfasst.

2. Nahrungsmittelzusammensetzung gemäß Anspruch 1, worin die Zusammensetzung von 6,5 Gew.-% bis 20 Gew.-%, vorzugsweise von 8 Gew.-% bis 15 Gew.-% hydrolysierte Gelatine umfasst.

3. Nahrungsmittelzusammensetzung gemäß einem vorhergehenden Anspruch, worin die Tryptophanquelle ein natürlicher Inhaltsstoff oder ein Extrakt eines natürlichen Inhaltsstoffs ist.

4. Nahrungsmittelzusammensetzung gemäß Anspruch 3, worin der Anteil an Tryptophan in der Tryptophanquelle geringer als 50% nach Gewicht ist.

5. Nahrungsmittelzusammensetzung gemäß einem vorhergehenden Anspruch, worin die Zusammensetzung von 0,1 mg bis 600 mg Tryptophan pro Portion umfasst.

6. Nahrungsmittelzusammensetzung gemäß einem vorhergehenden Anspruch, worin die Tryptophanquelle ausgewählt wird aus Molkerei-, Pflanzen- und Hefeproteinen und Gemischen daraus, vorzugsweise in Form von Molkenprotein, Weizenprotein, Eiweiß oder Eieralbumin, Volleipulver, Milchprotein, Hefeextrakt, Tomatenpulver, Erbsenprotein, Sojaprotein, Johannisbrotprotein oder Gemischen daraus.

7. Nahrungsmittelzusammensetzung gemäß einem vorhergehenden Anspruch, worin die Zusammensetzung weniger als 15 Gew.-% Molkereiprotein umfasst.

8. Nahrungsmittelzusammensetzung gemäß einem vorhergehenden Anspruch, worin die Nahrungsmittelzusammensetzung eine flüssige oder eine löffelbare Nahrungsmittelzusammensetzung ist.

9. Nahrungsmittelzusammensetzung gemäß einem der Ansprüche 1 bis 7, worin die Nahrungsmittelzusammensetzung ein Ernährungsriegel, ein Teigwaren- oder Getreideprodukt, eine Suppe oder ein Mischgetränk ist.

10. Nahrungsmittelzusammensetzung gemäß einem vorhergehenden Anspruch, worin die Nahrungsmittelzusammensetzung ein Mahlzeitenersatz oder andere Nahrungsmittelzusammensetzung zur Verwendung in einem Gewichtsverlust- oder Gewichtskontrollplan ist.

11. Nahrungsmittelzusammensetzung gemäß einem vorhergehenden Anspruch, worin die Zusammensetzung Kohlenhydrat umfasst.

12. Nahrungsmittelzusammensetzung gemäß einem vorhergehenden Anspruch, worin die Zusammensetzung bis zu 10 Gew.-%, vorzugsweise bis zu 6 Gew.-% Wasser umfasst.

13. Nahrungsmittelprodukt, umfassend die Nahrungsmittelzusammensetzung nach Anspruch 11 und eine Flüssigkeit, vorzugsweise Wasser, Milch oder Gemische daraus.

14. Nahrungsmittelprodukt gemäß Anspruch 13, umfassend 1 bis 99 Gew.-% Nahrungsmittelzusammensetzung und 1 Gew.-% bis 99 Gew.-% Flüssigkeit, vorzugsweise umfassend von 1 Gew.-% bis 50 Gew.-% Nahrungsmittelzusammensetzung und von 50 Gew.-% bis 99 Gew.-% Flüssigkeit.

## Revendications

1. Composition alimentaire comprenant:
(i) de 5 à 30 % en poids de gélatine hydrolysée, sur la base du poids total de la composition, et
(ii) une source de tryptophane, dans laquelle la proportion de tryptophane dans la source de tryptophane est inférieure à 100 %,
dans laquelle au moins 25 % de l'énergie nutritive de la composition alimentaire sont fournis par des protéines, et dans laquelle la composition comprend moins de 25 % en poids de protéines laitières.

2. Composition alimentaire selon la revendication 1, dans laquelle la composition comprend de 6,5 % en poids à 20 % en poids, de préférence de 8 % en poids à 15 % en poids de gélatine hydrolysée.

3. Composition alimentaire selon l'une quelconque des revendications précédentes, dans laquelle la source de tryptophane est un ingrédient naturel ou un extrait d'un ingrédient naturel.

4. Composition alimentaire selon la revendication 3, dans laquelle la proportion de tryptophane dans la source de tryptophane est inférieure à 50 % en poids.

5. Composition alimentaire selon l'une quelconque des revendications précédentes, dans laquelle la composition comprend de 0,1 mg à 600 mg de tryptophane par portion.

6. Composition alimentaire selon l'une quelconque des revendications précédentes, dans laquelle la source de tryptophane est choisie parmi les protéines laitières, de légumes et de levures et leurs mélanges, de préférence sous la forme de protéine de lactosérum, de protéine de blé, d'albumine d'oeuf ou de blanc d'oeuf, de poudre d'oeuf complet, de protéine de lait, d'extrait de levure, de poudre de tomate, de protéine de pois, de protéine de soja, de protéine de caroube ou de leurs mélanges.

7. Composition alimentaire selon l'une quelconque des revendications précédentes, dans laquelle la composition comprend moins de 15 % en poids de protéines laitières.

8. Composition alimentaire selon l'une quelconque des revendications précédentes, dans laquelle la composition alimentaire est une composition alimentaire liquide ou épaisse.

9. Composition alimentaire selon l'une quelconque des revendications 1 à 7, dans laquelle la composition alimentaire est une barre nutritive, des pâtes ou un produit de céréales, une soupe ou un lait fouetté.

10. Composition alimentaire selon l'une quelconque des revendications précédentes, dans laquelle la composition alimentaire est remplacement de repas ou une autre composition alimentaire à utiliser dans un plan de perte de poids ou de maîtrise de poids.

11. Composition alimentaire selon l'une quelconque des revendications précédentes, dans laquelle la composition comprend du glucide.

12. Composition alimentaire selon l'une quelconque des revendications précédentes, dans laquelle la composition comprend jusqu'à 10 % en poids, de préférence jusqu'à 6 % en poids d'eau.

13. Produit alimentaire comprenant la composition alimentaire selon la revendication 11, et un liquide, de préférence de l'eau, du lait ou des mélanges d'entre eux.

14. Produit alimentaire selon la revendication 13, comprenant 1 à 99 % en poids de composition alimentaire et 1 % en poids à 99 % en poids de liquide, comprenant de préférence de 1 % en poids à 50 % en poids de composition alimentaire et de 50 % en poids à 99 % en poids de liquide.
